# EUROPEAN PATENT APPLICATION

(11) **EP 1 475 224 A1**
(43) Date of publication of application: **10.11.2004**
(21) Application number: 04005587.3
(22) Date of filing: 09.03.2004
(51) Int. Cl.: B32B 7/12, B32B 17/02, B32B 19/06, E04B 1/78

(54) **Mineral wool product for insulating ovens**

(30) Priority: 09.05.2003 IT VE20030016
(71) Applicant: EUROFIBRE S.p.A., 37046 MINERBE (IT)
(72) Inventor: Vaccari, Bruno, 30020 - Marcon (IT)
(74) Representative: Piovesana, Paolo

(57) **Abstract**

A mineral wool product for insulating ovens, characterised by comprising a blanket (2) with its fibres bound together without organic size, and a glass fabric (4) joined to at least one face of said blanket (2) by an inorganic binder.

## Description

The present invention relates to a mineral wool product for insulating ovens.

Mineral wool products in the form of blankets are known, for use in particular for insulating the muffle of ovens for domestic kitchens or for communities. To ensure compactness of the product, its constituent fibres are held together by suitable adhesive sizes or by mechanical systems (stitching).

A known type of product, used in the past, consists of a mineral wool blanket having its fibres impregnated with an organic size and having one or both its faces either without covering or covered with an aluminium sheet. The aluminium covering is glued to the product by an inorganic binder.

Insulating mineral wool products are also known, with their fibres impregnated with organic size and with one or both their faces covered with glass fabric. These are used in applications different from domestic or community ovens, where the temperature resistance requirements are less.

Subsequently, regulations were published prescribing a virtually zero formaldehyde or methylisocyanate emission from insulating products usable in domestic or community ovens; for this reason the industry has conceived products with mineral wool fibres held together by an inorganic binder or by a mechanical system (stitching), and with one or both faces covered with an aluminium sheet applied to the mineral wool blanket by an inorganic glue.

From the formaldehyde and methylisocyanate emission viewpoint, the problem has been completely solved by the total elimination of organic size to impregnate the mineral wool fibres. Moreover, the aluminium covering on glass or rock wool products has two functions:
- to improve the mechanical handling of the product by the increased rigidly provided by the aluminium covering,
- to enable the products to be mounted by operators without these coming into contact with constituent fibres of the products. Although these fibres have been recognized as innocuous by the most recent medical and biological research and study, they can cause irritation to the skin of the operators handling the products during their installation in ovens; this irritative effect, of mechanical type, disappears when exposure to the operators ceases; for this reason it is advisable to use covered products, as also stated in Circular No.23 of 1991 issued by the Italian Health Ministry.

The only widely available covering, of relatively low cost, easy application and workability, with low or zero formaldehyde or methylisocyanate emission, is aluminium sheet between 15 and 50 micron thickness.

The aluminium sheet is glued to the glass or rock wool product using an inorganic glue to prevent formaldehyde or methylisocyanate emissions by the glue on using the insulating product at the operating temperature (250-300°C).

However the aluminium covering has the drawback of causing electrical dispersion problems in domestic or community ovens; the problem has recently become even more felt by the domestic or community oven manufacturing industry because new regulations regarding he limiting of energy consumption has lead to the re-design of ovens and the relative insulating products. In particular, the holes which characterised the jackets and in particular the rear parts (the insulating products positioned on the rear of the oven) have been replaced by slots through which to pass the electrical contacts.

For this reason the domestic and community oven manufacturing industry has requested the elimination of the aluminium covering, but while still requiring protection for the aforesaid reasons.

A first solution has been provided by the insulating product manufacturers, by forming areas free of aluminium covering around the electrical contact passage regions.

However, this solution involves high costs due to large amount of labour required to eliminate the aluminium from those particular areas of the insulating jacket and rear part.

The problem is solved according to the invention by a mineral wool product for insulating ovens as described in claim 1.

Two preferred embodiment of the present invention are described in detail hereinafter with reference to the accompanying drawings, in which:
Figure 1 is a partial perspective view of a portion of a first embodiment of the product according to the invention, and
Figure 2 shows a variant thereof.

As can be seen from the figures, the product of the invention consists essentially of the combination of a mineral wool blanket 2 and a glass fabric 4. The blanket 2 is formed of glass wool or rock wool with the fibres bound together without using organic size, i.e. by stitching or by inorganic size, in order to totally exclude the emission of formaldehyde or methylisocyanate when the product is heated.

In the case of inorganic size, this can consist for example of a colloidal solution of silica or of aluminium polyphosphate.

The glass fabric 4 presents the following characteristics:
- absolute absence or the lowest possible level of fume, odour, formaldehyde or methylisocyanate emissions from the covering, once applied to the glass wool or rock wool product,
- the same mechanical performance as traditional aluminium coverings,
- ability to act as a barrier in contact with the insulating fibres when the product is installed by operators.

To present these characteristics, the glass fabric must:
- be free of coloration, and more particularly be free of organic pigments which can cause emissions on heating the product,
- have its constituent fibres suitably heat-treated, to eliminate substances of organic type used in their manufacture (deoiling process),
- have a finish such as to ensure such mechanical performance as to enable it to be applied, by gluing with inorganic glue, directly on the glass wool or rock wool product production lines and to be then subjected to further working, such as cutting, punching and compressed packaging.

The treatment to which the glass fabric 4 is subjected is based on the application of glues or sizes of totally inorganic type, such as colloidal solutions of silica or aluminium polyphosphate. Glues and/or sizes can be applied, on the basis of the final mechanical characteristics of the fabric to be used, in percentages which can vary from 3 to 10%.

The mineral wool blanket 2 and glass fabric 4 are joined together by gluing, using inorganic glue, for example sodium silicate.

The product of the invention is particularly advantageous compared with traditional product intended for oven insulation, and in particular:
- it ensures the virtually total absence of fume, odour, formaldehyde or methylisocyanate emissions,
- it offers the same mechanical performance as those blankets in which an aluminium sheet is applied to the mineral wool, and in particular simplifies the handling of the product by the operators assembling the oven,
- it completely eliminates the phenomenon of electrical dispersions.

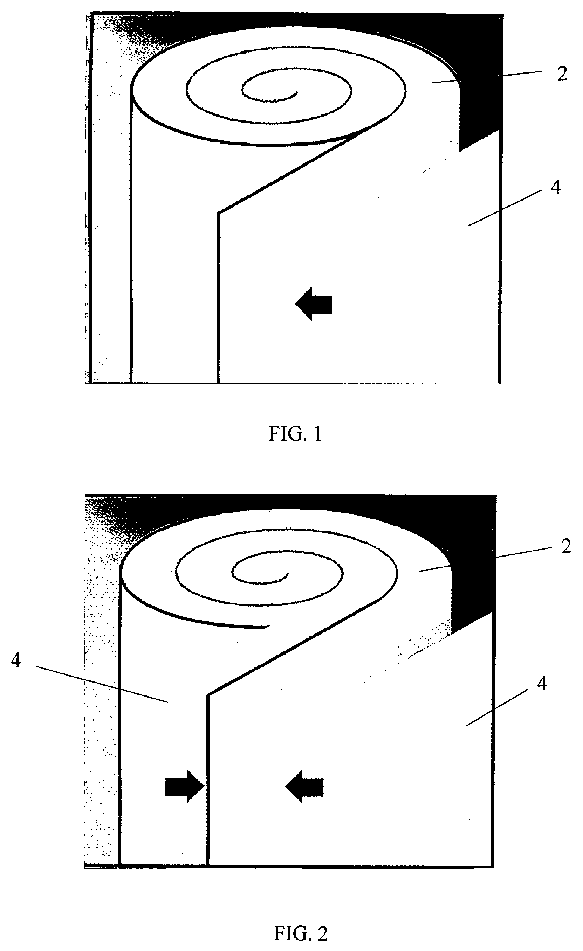

The product shown in Figure 1 consists of a blanket 2 and a glass fabric sheet 4 applied to one of its two faces, while the product shown in Figure 2 consists of a blanket 2 and two glass fabric sheets 4 applied to both its faces.

## Claims

1. A mineral wool product for insulating ovens, **characterised by** comprising a blanket (2) with its fibres bound together without organic size, and a glass fabric (4) joined to at least one face of said blanket (2) by an inorganic binder.

2. A product as claimed in claim 1, **characterised in that** the blanket (2) consists of rock wool.

3. A product as claimed in claim 1, **characterised in that** the blanket (2) consists of glass wool.

4. A product as claimed in claim 1, **characterised in that** the fibres of the blanket (2) are bound together by stitching.

5. A product as claimed in claim 1, **characterised in that** the fibres of the blanket (2) are bound together by inorganic size.

6. A product as claimed in claim 5, **characterised in that** the inorganic size consists of a colloidal solution of silica.

7. A product as claimed in claim 5, **characterised in that** the inorganic size consists of a colloidal solution of aluminium phosphate.

8. A product as claimed in claim 1, **characterised in that** the glass fabric (4) is of a type free of organic pigments.

9. A product as claimed in claim 1, **characterised in that** the glass fabric (4) has its constituent fibres suitably heat treated in order to eliminate those substances of organic type used in their manufacture (deoiling process).

10. A product as claimed in claim 1, **characterised in that** the glass fabric (4) undergoes a finishing treatment such as not to be able to develop fumes, odours, formaldehyde or methylisocyanate when heated in combination with the blanket (2).

11. A product as claimed in claim 1, **characterised in that** the blanket (2) and the glass fabric (4) are joined together by a glue consisting of sodium silicate.
